# EUROPEAN PATENT SPECIFICATION

(11) **EP 2 582 566 B1**
(45) Date of publication and mention of the grant of the patent: **01.03.2017**
(21) Application number: 11795241.6
(22) Date of filing: 15.06.2011
(51) Int. Cl.: B62D 25/20, B62D 27/02, B62D 33/00

(54) **A FLOORING FOR A FREIGHT TRANSPORTATION VEHICLE OR TRAILER**
BODENBELAG FÜR EIN FRACHTTRANSPORTFAHRZEUG ODER EINEN ANHÄNGER
PLANCHER POUR VÉHICULE OU REMORQUE DE TRANSPORT DE FRET

(30) Priority: 15.06.2010 FI 20105693
(43) Date of publication of application: 24.04.2013
(73) Proprietor: UPM-Kymmene Wood Oy, 15140 Lahti (FI)
(72) Inventor: PATOVIRTA, Juha, FI-15870 Hollola (FI); TARVAINEN, Ilkka, FI-15870 Hollola (FI)
(74) Representative: Berggren Oy, Tampere
(86) International application number: PCT/FI2011/050569
(87) International publication number: WO 2011/157897

(56) References cited:
- EP-A1- 1 445 178
- WO-A1-99/48683
- JP-A- 2010 208 133
- US-A- 5 509 715
- US-A1- 2005 266 200

## Description

The invention relates to a transport vehicle or trailer. The invention relates to a transport vehicle or trailer comprising a flooring. The invention also relates to a method for forming a flooring according to the invention for a freight transport vehicle or trailer.

At present, floorings for freight transport vehicles or trailers are normally made of various plate elements of wood-based material which are fixed at their edges, next to each other or one after the other, to the frame beams of the frame of the freight transport vehicle or trailer, by means of screws. Normally, these wood-based plate elements used at present are made of plywood board, or solid wood board coated with a suitable coating, or, for example, wood-based composite boards with a plastic coating, as presented, for example, in WO 99/48683.

The patent application EP144578 discloses floor of a vehicle for load carrying. The floor comprises a plate-like flat structure mounted on the vehicle main frame, wherein the plate-like flat structure comprises a board formed of three layers, with a middle layer of cellular matrix, and a framework forming a portion of the main frame. The layers may be adhesively bonded together. In an embodiment, the framework comprises rod-like transverse inserts. The inserts may be integral with the board layers through proper adhesive.

It is labor-consuming and slow to fix the plate elements of the flooring to the frame beams with screws, because there are a lot of screws (normally about 100 to 200) and their fixing to the frame beams requires that boreholes are drilled through the walls of the frame beams (Nowadays self-drilling screws have been also used but assembly with these is still quite labour-consuming). Furthermore, when driving in rain and on a wet road, water leaks at the screw fixing locations through the flooring to the inside of the body of the freight transport vehicle or trailer. Through the screw holes, water also enters the frame beams and the space between the screws and the frame beams. This increases the corrosion of the frame beams and the screws, which in turn affects, among other things, the remaining of the flooring in its fixed position and, eventually, also the strength of the frame structures.

It is an aim of the invention to provide a novel flooring for a freight transport vehicle or trailer, for eliminating the above-mentioned drawbacks related to the floorings of prior art. In particular, it is an aim of the invention to present a flooring for a freight transport vehicle or trailer, which can be fixed to the frame of the transport vehicle or trailer in an easier and simpler way than before. It is also an aim of the invention present a novel flooring for a freight transport vehicle or trailer, which is stronger and more leak-proof and less susceptible to the corrosion effects of moisture than the floorings of prior art which are fixed with screws. Furthermore, it is an aim of the invention to present a method for forming a flooring according to the invention for a freight transport vehicle or trailer.

In the invention, the inventive idea is that the flooring, is fixed to the frame of the freight transport vehicle or trailer by means of adhesive instead of screws or other separate fixing means requiring the formation of holes. Screws or other separate additional fixing means can only be installed in the most critical locations in view of the fixing of the flooring, if necessary.

To be more precise, the freight transport vehicle or trailer according to the invention is presented in the independent claim 1.

In an advantageous embodiment of the flooring according to the invention, the flooring consists of plate elements to be fixed next to each other and/or one after the other on top of the frame beams and/or intermediate beams of the frame of the trailer by means of adhesive joints between the edges of the plate elements and the frame beams and/or intermediate beams.

In another advantageous embodiment of the flooring according to the invention, the plate elements are fitted between the frame beams and/or intermediate beams. Thus, it has been possible to fix them to the frame beams either solely at the vertical side surfaces of their edges, or both at the side surfaces and the lower surfaces, or by providing the frame beams with special fixing profiles for the fixing of the frame beams.

Before bonding the flooring according to the invention, a primer might be applied onto the surfaces to be bonded, and the bond applied is advantageously, for example, a single-component polyurethane adhesive. However primer is not always used and in some embodiments also two-component adhesive might be applied. In case of two-component adhesive the mixing of the components might happen in to a spreading nozzle used for application of the adhesive.

An advantage with the flooring for a freight transport vehicle or trailer according to the invention is that the flooring can be made more leak-proof and stronger (about 28 to 91% according to calculations made). Another advantage is that, thanks to the elimination of screw holes, it is possible to avoid damage caused by moisture penetrating via them through the flooring, such as the corrosion of the trailer frame and the screws, as well as the weakening of the flooring with its fixing and the structures of the frame, resulting from corrosion and moisture. The lack of screws (or other separate fixing elements) ensures that there are no unfastening screws or other separate fixing elements floating on the floor and causing damages to the goods being transported. Yet another advantage is, among other things, the fact that the weight of the freight transport vehicle or trailer can become smaller than before, because of, among other things, simpler structures, less moisture accumulating in the structures (during use), as well as the elimination of separate fixing means.

The method according to the invention has the advantage that the installation of the flooring for a freight transport vehicle or trailer becomes easier and faster. Also, the quantity of material needed is reduced. Thanks to these advantages relating to the method of the invention, the work and material costs in the manufacture of the freight transport vehicle or trailer are reduced, which improves the economic profitability of the operation of manufacturers of freight transport vehicles and trailers.

Furthermore, it should be noted that in this context, a freight transport vehicle refers to a vehicle intended for the transportation of various bulk freight of solid material, for example a truck, a semi-trailer with a bolster-type truck, a full trailer hauled by a truck, a delivery van or pickup, or another similar vehicle or articulated vehicle which is known as such and moving on rubber-tired wheels, the vehicle and/or the trailer comprising a particular load space or body that is intended solely for the transportation of various freight or bulk freight of said kind. The term freight transport vehicle or trailer also covers such trains and cars moving on rails that are only intended for the transportations of freight and above-mentioned bulk freight. Furthermore, the term freight transport vehicle or trailer also covers, for example, various trailers to be hauled by a car, a van, a tractor, or a dune buggy. However, cars, tractors or dune buggies as such cannot be regarded as freight transport vehicles intended in this application.

Next the invention is described in more detail by referring the appended drawings, in which
- fig. 1: shows a frame of a freight transporting trailer according to the invention and a flooring attached therein from above.
- fig. 2: shows a side view the frame of the freight transporting trailer according to fig. 1,
- fig. 3: shows cross sectional view of the transversal intermediate beam connected to the longitudinal frame beam at location D,
- fig. 4: shows cross sectional view of the transversal intermediate beam connected to the longitudinal frame beam at location E,
- fig. 5: shows cross sectional view of the transversal intermediate beam connected to the longitudinal frame beam at location C, and
- fig. 6: shows an another embodiment of a flooring of a freight transporting trailer according to the invention from above.

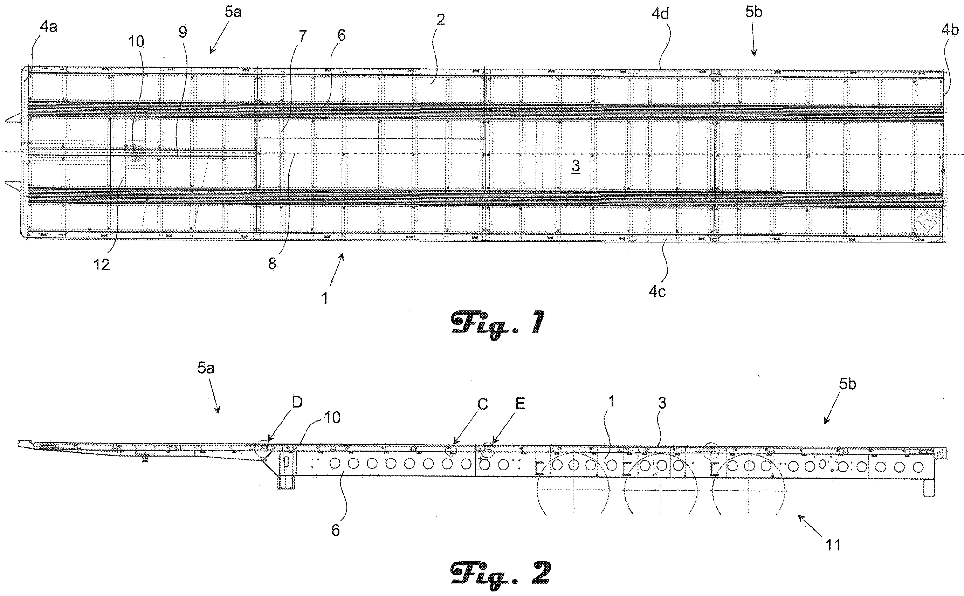

The freight transportation trailer shown in the figures 1-5 consist in longitudinal sense two parts; A front part 5a comprising the attachment means 10 for attaching the trailer and a pulling vehicle pivotally to each other and a main part 5b below which the bogie-part 11 of trailer has been assembled. Both of these parts 5a and 5b are covered with the plate elements 2a and 2b forming the flooring 3 to the trailer body. As in the prior trailers of this type, the flooring 3 is surrounded with metallic edge profiles 4a-d wherein the vertical side walls of the trailer can be attached. The common frame 1 of both aforementioned parts 5a and 5b consists of a pair of longitudinal frame beams 6 and plurality of transversal frame beams 7 (i.e. intermediate beams) attached perpendicularly to the longitudinal frame beams 6 within distance from each other. The longitudinal frame beams 6 are situated to both sides of the longitudinal central line 8 of the trailer about halfway between the central line 8 and the side edge profiles 4c and 4d of the frame as shown in the figure 1. In the front part 5a there is an additional longitudinal beam 9 extending along the central line 8 of the trailer. The pivotal attachment means 10 for connecting the trailer to the hauling vehicle is situated In the center of this beam. There is also additional transversal beams 12 in both sides of the pivotal attachment means 10 as it can be seen from cross directional dotted lines marked to the figure 1.

The flooring 3 of this embodiment consist plurality of plate elements 2a and 2b being attached one after another between the longitudinal frame beams 6 and intermediate beams 7 of the frame 1. The transversal edges of the plate elements 2a and 2b are in butt connection with the adjacent plate elements 2a and 2b and in the ends of the trailer also in butt connection with transversal edge profiles 4a and 4b. The longitudinal edges of the plate elements 2a and 2b are against the longitudinal frame beams 6 and the longitudinal edge profiles 4c and 4d.

In this embodiment, plate elements 2a and 2b are attached on to the upper face side of the intermediate beams 7 by adhesive supplied on to the upper face surfaces 13 of the intermediate beams 7. In the prior art trailers, the plate elements are secured accordingly but using screws or bolts being assembled to the holes bored through the plate elements and the intermediate beams. The adhesive provided in this application is in this case one-component polyurethane adhesive. The attachment surfaces 13 of the intermediate beams 7 and the edge areas of the lower surfaces of the plate elements are treated with primer prior the application of the adhesive for increasing the adhesive force between these surfaces and the adhesive.

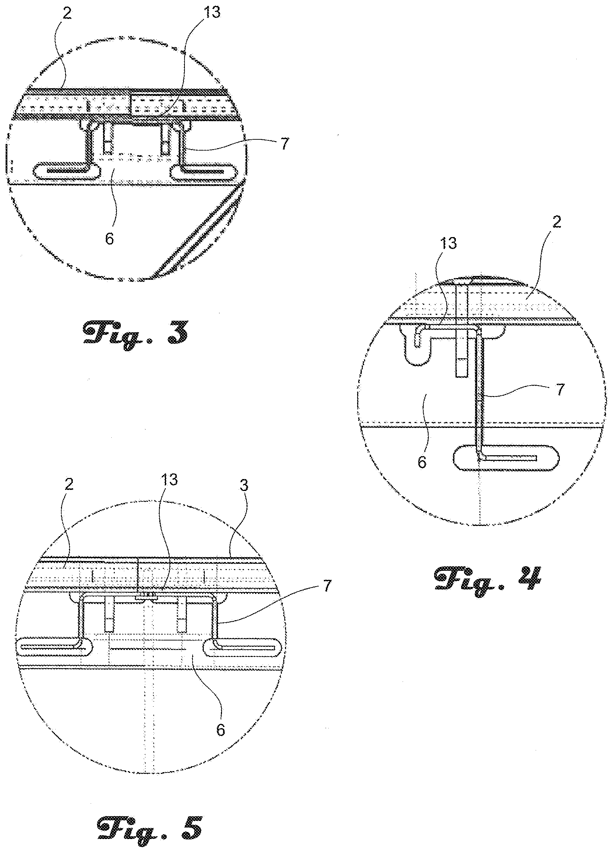

In this embodiment the profile of the intermediate beams vary according to the placement of the beam in the frame. It is shown in figures 3-5 the different types of the profiles used in this embodiment. Reference signs D, E and B in figure 2 shows some example locations where these profile types are used. As shown in figure 3 the profile of the intermediate beam at location "D" consists U-profile with additional flanges extending horizontally from the ends of the vertical flanges of the U-profiles. According to figure 4 at the point "E" the intermediate beam is a Z- profile and as shown in figure 5 at the point "B" the profile of the intermediate beam is formed of two Z-profiles being placed next to each other so that the upper flanges of the Z-profiles are connected together by means of an suitable connecting element. These beams are fixed to the longitudinal frame beams 6 by welding them to the side surfaces of the vertical web plates of the longitudinal frame beams 6. The type of intermediate beam 7 (i.e. any the type shown in figs. 3-5) that have been used in certain location depends on the other constructional elements of the frame around that location. In view of the invention, it is important that there is always flat surface on top of the profile for forming an attachment surface to the plate elements 2a and 2b being fixed on to the intermediate beams 7.

As illustrated in figure 1, there is also basically two types of plate elements 2a and 2b in this embodiment. The first type of plate elements 2a are those forming the central part of the flooring 3 and being between the longitudinal frame beams of the trailer. The second type of plate elements 2b are those forming edge portions of the flooring 3 and being between the longitudinal frame beams 6 and the side edge profiles 4c and 4d of the frame 1. In this case the latter are clearly narrower than the former. The shape of the edges of the plate elements 2a and 2b are formed to conform the shape of the adjacent constructional elements such that the flooring 3 build up from the plate elements 2a and 2b, edge profiles 4a-d and upper flanges of the longitudinal frame beams 6 would be as flat and leak proof as possible.

The material of the plate elements 2a and 2b is in this case plywood boards formed of birch veneer the upper surface of which has been coated with phenol resin layer. Plate-elements made of coated hardwood-based plywood (e.g. plywood formed of birch veneer by bonding at least two birch veneer sheets one upon the other).

Although the frame and screws thereof are usually protected against corrosion (painted or E-coated) moisture and formic acid emitted by birch veneer causes some corrosion load to them. The corrosion of the frame and screws is accelerated also because the screws form connection between alkaline wood and frame beams at the point of boreholes where the corrosion protection of the frame beams as well as the coating of the plywood has been broken. Thus the advantage of the use of phenol resin coating on the birch or other hardwood plywood board is that it forms with adhesive attachment a resistive construction against corrosion wherein the connection between wood of the plywood boards and the frame beams is formed only by means of adhesive being between phenol resin coating of plywood boards and the frame beams.

Another advantage regarding the use of phenol coating is that the surface of the coating is even and homogenous because it does not contain knags etc. Furthermore, the consumption of the adhesive is lower for coated board than for uncoated board because the adhesive does not soak in to the coated board as much as to the uncoated board. Furthermore, the attachment of phenol resin on to the surface of the plywood is straightforward since standardized processes can be applied.

When assembling the flooring shown in figures 1-5 it is, at first, cleaned with the help of suitable washing detergent (e.g. with the help of solvent based cleaning detergent and pressurized water) at least those upper surfaces of the intermediate beams 7 being the attachment surfaces 13 for the plate elements 2a and 2b such that any dirt and/or fattiness will be removed from these surfaces. If any water has been used, the frame must be dried prior bonding of the plate elements 2a and 2b. However, any cleaning may not be necessary if the attachment surfaces 13 are already free from dirt after the previous manufacturing stages.

When suitable preprocessing for ensuring appropriate cleanliness has been performed, the upper surfaces 13 of the intermediate beams 7 and those edge parts of the lower surfaces of the plate elements becoming against the upper surfaces 13 of the intermediate beams 7 are treated with a primer. As mentioned above, this is done for ensuring the appropriate adhesion of the adhesive used for attachment of the plate elements. After drainage of the primer, the suitable amount of adhesive is spread to bonding areas that are as mentioned above, situated to the upper surfaces 13 of the intermediate beams 7 and/or to edge parts of the lower side of the plate elements. This can be carried out manually by using suitable extrusion equipment or automatically e.g. in an production line equipped with robot arms for spreading the adhesive. Usually adhesive forms a layer having thickness of 1 to 2 mm between the intermediate beams and the plate elements. This have to be taken in to account when determining the position of the upper surfaces of the intermediate beams. After the spreading-phase, the plate elements 2a and 2b are placed one after another on to the intermediate beams 7 such that for those plate elements 2a and 2b being between the longitudinal frame beams 6, the longitudinal edges are against the inner edges of the flanges of the longitudinal frame beams 6, and for those plate elements being between the edge profiles and the frame beams, the inner longitudinal edges are against the outer edges of the flanges of the longitudinal frame beams 6 and the outer longitudinal edges are against the inner side of the edge profiles 4c and 4d. The transversal edges of the plate elements 2a and 2b, except the front edges of the foremost row at front part 5a of the frame 1 and the rear edges of the rearmost row of plate elements at the rear part 5b of the frame 1, are against each other, in this case, such that the connection planes formed by two adjacent transversal sides of the plate elements 2a and 2b are coplanar with the longitudinal center lines of the intermediate beams 7 being between the longitudinal frame beams 6 and the side edge profiles 4c and 4d. The front edges of the foremost row of the plate elements 2a and 2b at front part of the frame 1 are against the inner side of the transversal edge profile 4a and the rear edges of the rearmost row of plate elements 2a and 2b at the rear part of the trailer are against the inner side edges of the transversal edge profile 4b, similarly as the longitudinal edges of the outer plate elements 2b are against the inner side edges of the longitudinal side edge profiles 4c and 4d.

For ensuring the tightness of the flooring 3, it may be also provided some adhesive between the transversal edges of the adjacent plate elements 2a and 2b, between the inner longitudinal edges of the plate elements 2b and the outer side edges of the longitudinal frame beams 6 as well as between the outer edges of the plate elements 2a (i.e. those forming the side portions of the flooring 3) and the inner sides of the edge profiles 4a-4d.

During the curing of the adhesive, the plate elements 2a and 2b might be pressed against the attachment surfaces 13 of the intermediate beams 7 if it seems to be necessary in order to get surfaces being bonded together appropriately against each other. This can be carried out in various ways. There might be, for instance, suitable loading objects being placed on to the plate elements. There might be provided one loading object for each plate element 2a and 2b or there might be some, or only one load that is laid on to the whole flooring 3. If common loading object for two or more plate elements 2a and/or 2b is used there might be provided some elastic material between the loading object and the plate elements 2a and/or 2b for ensuring that the load of the loading object distributes as evenly as possible to all plate elements 2a and/or 2b being pressed. Alternatively, pressing might be carried out mechanically by pressing the plate elements 2a and 2b against the attachment surfaces 13 of the intermediate beams 7 with the help of hand-screw presses, adjustable clamps or hydraulically or pneumatically actuated pressing device or devices. Also when this kind of pressing is used, the even distribution of the load can be ensured by similar or corresponding means as described above.

Since adequate curing of the adhesive has took place the loading objects or in case of mechanical pressing the pressing devices (if used) are removed after which the assembly of the flooring 3 is normally complete. In some cases, there might be necessary to include some additional securing elements such as rivets, screws or bolts to the most critical places (e.g. to the corners of the plate elements), especially, if the trailer is used for transporting such goods that may be very demanding in respect of the strength and durability of the flooring 3. For instance, in case when the trailer is used for transporting very heavy loads or objects being secured to the flooring 3 with such attachment belts that are attached directly to the flooring 3, the additional securing elements might be necessary. These additional securing elements can be assembled preferably after the plate elements 2a and 2b have been placed on the intermediate beams prior to pressing and curing stage. However, although some screws might be needed for ensuring the strength and durability of the flooring in some quite unusual cases is the amount material and work needed in those cases still minimal when compared it to the amount of work and material used in assembly of such prior art floorings which is secured to the frame beams of a trailer by means of screws or bolts only.

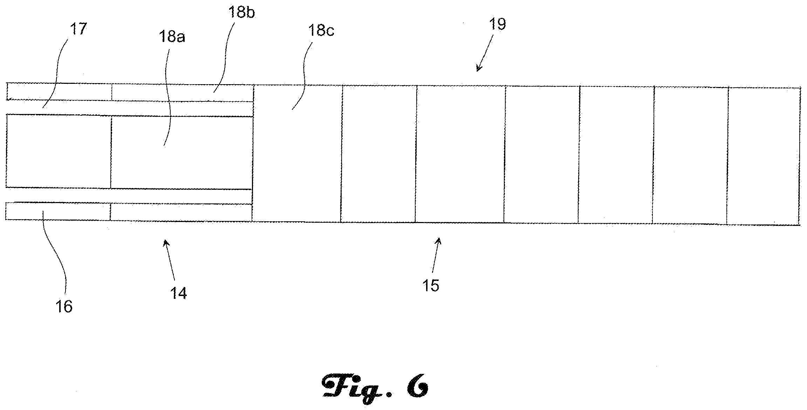

In figure 6 it is shown an another embodiment of the flooring 19 of a freight transporting trailer according to the invention. Also in this case, the freight transport trailer consists, in longitudinal sense, a front part 14 and a main part 15. However, in this embodiment the flooring 19 of the front part 14 is formed by using different type of plate elements as the flooring 19 in the main part. In the front part 14 the plate elements are elongated in the longitudinal direction and those plate elements 18a being between the longitudinal frame beams 16 and 17 are considerably wider than those plate elements 18b being between the edges of the flooring 18 and the longitudinal frame beams. In the main part 15 the flooring consist of plate elements 18c extending in transversal direction from one side to another. In the both parts 14 and 15 the plate elements 18a-18c are placed longitudinally on after another. The plate elements 18a and 18b of the front part 14 have been bonded on to the intermediate beams (not shown) similar to the embodiment shown in the figures 1-5 whereas the plate elements 18c of the main part 15 have been bonded also from their lower side on to the longitudinal frame beams 16 and 17. In order to get the plate elements of the front part 14 and the main part 15 in to the same level in vertical direction the longitudinal frame beams 16 and 17 have to be constructed such that they are lower (an amount of thickness of the plate elements) in the region of the main part 15 than in the region of the front part 14. The bonding of the plate elements 18a-18c is carried out mainly similarly in this embodiment as in the embodiment shown in figures 1-5. However, it should be notified that since in the main part 15 of this embodiment the plate elements 18c are considerably wider than plate elements 2a and 2b in the embodiment shown in figures 1-5 it is more crucial, in this case, to use at least in the region of the main part 15 some of pressing methods described above during the cure of the adhesive.

The flooring according to the invention might be formed also differently as described in the above described embodiments. For instance, the attachment surfaces of the plate elements can be, instead of the lower edge surfaces, the side surfaces of plate elements. In that case, the intermediate beams might be formed e.g. from such profiles having vertical connection surfaces that can be used as the attachment surfaces of the plate elements. In some applications, it is also possible to use tongue-and-groove joints for connecting adjacent plate elements to each other. Further in some other embodiments the sides of the plate elements can be cut out so that their shape conforms the shape of the sides of the beams to which they are bonded. Therefore there could be preferably such shapes in the beams that restrain the plate elements at least in one direction. This direction might be advantageously chosen such that it is the direction being the most critical direction in point of view of the strength of the adhesive i.e. it prevents more preferably tensile loads than those causing shearing forces to the adhesive attachments between the plate elements and the frame.

The amount of the plate elements used for forming a flooring may also vary. The flooring described above has been composed as many plate elements as there is open spaces between the longitudinal frame beams and transversal intermediate beams. In another embodiments one plate element might cover two or more that kind of open spaces. Naturally, the plate elements can be also be formed from some other hardwood-based plywood board as birch plywood.. These plate materials can be also coated with some suitable hard and durable material layers which can be phenol resin layer or some other resin (or plastic) having corresponding durability and mechanical properties. In addition the adhesive used for bonding the plate elements might be instead of one-component polyurethane adhesive e.g. some two-component type adhesive such as epoxy adhesive or two-component polyurethane adhesive.

Also many other constructional parts and details of the flooring according to the invention, as well as the ways of action in the method of forming such flooring can be carried out in ways differing from the above described examples, but being within the scope of the invention defined hereafter in the claims.

## Claims

1. A freight transport vehicle or trailer, comprising
- a frame having a common frame, the common frame consisting of a pair of longitudinal beams (6, 16, 17) and intermediate beams (7), which are transversal,
- a flooring (3; 19) fixed to the frame (1) of the freight transport vehicle or trailer,
- the flooring (3; 19) or its parts (2a, 2b; 18a-18c) has been made of plywood board with a phenol resin coating,
- at least part of the flooring (3; 19) has been fastened to the frame (1) by means of adhesive,
- at least that part in the frame (1) of the freight transport vehicle or trailer, to which the flooring (3; 19) has been fixed, comprises frame beams (6, 7; 16, 17) fastened to each other,
**characterized in that**
- the flooring (3; 19) comprises two or more plate elements (2a, 2b; 18a, 18b) which have been fitted next to each other and/or one after the other between the frame beams (6, 7; 16, 17) and
- the plate elements (2a, 2b; 18a-18c) have been bonded, at least at the side surfaces of their edges, to the frame beams (6, 7; 18a-18c).

2. The freight transport vehicle or trailer of claim 1, wherein
- the plate elements (2a, 2b) are attached on to the upper face side of the transversal intermediate beams (7) by adhesive supplied on to the upper face surfaces (13) of the intermediate beams (7).

3. The freight transport vehicle or trailer of claim 1 or 2, wherein
- the frame further comprises metallic edge profiles (4a-4d),
- the flooring (3; 19) comprises adhesive
• between the transversal edges of the adjacent plate elements (2a and 2b),
• between the inner longitudinal edges of the plate elements (2b) and the outer side edges of the longitudinal frame beams (6), as well as
• between the outer edges of the plate elements (2b) and the inner sides of the edge profiles (4a-4d).

4. The freight transport vehicle or trailer of any of the claims 1 to 3, comprising
- additional securing elements such as rivets, screws or bolts included to the most critical places e.g. to the corners of the plate elements (2a,2b).

5. The freight transport vehicle or trailer of any of the claims 1 to 4, wherein
- the frame further comprises metallic edge profiles (4a-4d) and
- the shape of the edges of the plate elements (2a, 2b) are formed to conform the shape of the adjacent constructional elements such that the flooring (3; 19) build up from the plate elements (2a, 2b), edge profiles (4a-4d) and upper flanges of the longitudinal frame beams (6) would be as flat and leak proof as possible.

6. The freight transport vehicle or trailer of any of the claims 1 to 5, wherein
- the plate elements (2a, 2b) are made of coated hardwood-based plywood.

7. The freight transport vehicle or trailer of the claim 6, wherein
- the plate elements (2a, 2b) comprise plywood made of birch veneer.

8. The freight transport vehicle or trailer of any of the claims 1 to 7, wherein
- at least part of the edges of the plate elements (2a, 2b; 18a-18c) have been equipped with grooves and tongues, and that the opposite grooved and tongued edges of the plate elements (2a, 2b; 18a-18c) next to each other and/or one after the other are interlocked and bonded to each other.

## Patentansprüche

1. Frachttransportfahrzeug oder -anhänger, aufweisend
- einen Rahmen mit einem Basisrahmen, wobei der Basisrahmen aus einem Paar von Längsträgern (6, 16, 17) und Zwischenträgern (7) besteht, die transversal sind,
- einen Fußboden (3; 19), der an dem Rahmen (1) des Frachttransportfahrzeugs oder -anhängers befestigt ist,
- wobei der Fußboden (3; 19) oder dessen Teile (2a, 2b; 18a bis 18c) aus einer Sperrholzplatte mit einer Phenolharzbeschichtung gefertigt wurde,
- zumindest ein Teil des Fußbodens (3; 19) mittels Klebstoff am Rahmen (1) befestigt wurde,
- zumindest der Teil im Rahmen (1) des Frachttransportfahrzeugs oder -anhängers, an dem der Fußboden (3; 19) befestigt wurde, aneinander befestigte Rahmenträger (6, 7; 16, 17) aufweist,
**dadurch gekennzeichnet, dass**
- der Fußboden (3; 19) zwei oder mehr Plattenelemente (2a, 2b; 18a, 18b) aufweist, die nebeneinander und/oder hintereinander zwischen den Rahmenträgern (6, 7; 16, 17) verlegt wurden, und
- die Plattenelemente (2a, 2b; 18a bis 18c) zumindest an den Seitenflächen ihrer Kanten an die Rahmenträger (6, 7; 18a bis 18c) gebunden wurden.

2. Frachttransportfahrzeug oder -anhänger nach Anspruch 1, wobei
- die Plattenelemente (2a, 2b) auf dem oberen Spiegel der Zwischenquerträger (7) durch auf die Flächen der oberen Seite (13) der Zwischenträger (7) aufgebrachten Klebstoff angebracht sind.

3. Frachttransportfahrzeug oder -anhänger nach Anspruch 1 oder 2, wobei
- der Rahmen ferner metallische Kantenprofile (4a bis 4d) aufweist,
- der Fußboden (3; 19) Klebstoff aufweist, und zwar
• zwischen den Querkanten der angrenzenden Plattenelemente (2a und 2b),
• zwischen den inneren Längskanten der Plattenelemente (2b) und den äußeren Seitenkanten der Längsrahmenträger (6) sowie
• zwischen den Außenkanten der Plattenelemente (2b) und den Innenkanten der Kantenprofile (4a bis 4d).

4. Frachttransportfahrzeug oder -anhänger nach einem der Ansprüche 1 bis 3, aufweisend
- zusätzliche Sicherungselemente, wie Nieten, Schrauben oder Bolzen, die an den kritischsten Stellen, z. B. an den Ecken der Plattenelemente (2a, 2b), enthalten sind.

5. Frachttransportfahrzeug oder -anhänger nach einem der Ansprüche 1 bis 4, wobei
- der Rahmen ferner metallische Kantenprofile (4a bis 4d) aufweist und
- die Form der Kanten der Plattenelemente (2a, 2b) so gebildet ist, dass sie zur Form der angrenzenden Konstruktionselemente passt, so dass der Fußboden (3; 19), der aus den Plattenelementen (2a, 2b) gebildet ist, die Kantenprofile (4a bis 4d) und obere Flansche der Längsrahmenträger (6) möglichst flach und auslaufsicher sind.

6. Frachttransportfahrzeug oder -anhänger nach einem der Ansprüche 1 bis 5, wobei
- die Plattenelemente (2a, 2b) aus einem beschichteten Sperrholz auf Hartholzbasis gefertigt sind.

7. Frachttransportfahrzeug oder -anhänger nach Anspruch 6, wobei
- die Plattenelemente (2a, 2b) Sperrholz aus Birkenfurnier aufweisen.

8. Frachttransportfahrzeug oder -anhänger nach einem der Ansprüche 1 bis 7, wobei
- zumindest ein Teil der Kanten der Plattenelemente (2a, 2b; 18a bis 18c) mit Nuten und Federn versehen wurde, und dass die gegenüberliegenden Nut- und Federkanten der Plattenelemente (2a, 2b; 18a bis 18c) nebeneinander und/oder hintereinander verblockt und aneinander gebunden sind.

## Revendications

1. Véhicule ou remorque de transport de fret, comprenant
- un châssis ayant un châssis commun, le châssis commun consistant en une paire de poutres longitudinales (6, 16, 17) et des poutres intermédiaires (7), qui sont transversales,
- un revêtement de sol (3 ; 19) fixé au châssis (1) du véhicule ou de la remorque de transport de fret,
- le revêtement de sol (3; 19) ou ses parties (2a, 2b; 18a-18c) a/ont été fabriqué(es) à partir d'un panneau contreplaqué avec un revêtement de résine phénolique,
- au moins une partie du revêtement de sol (3 ; 19) a été fixée au châssis (1) au moyen d'un adhésif,
- au moins cette partie dans le châssis (1) du véhicule ou de la remorque de transport de fret, sur laquelle le revêtement de sol (3 ; 19) a été fixé, comprend des poutres (6, 7 ; 16, 17) de châssis fixées les unes aux autres,
caractérisé(e) en ce que
- le revêtement de sol (3 ; 19) comprend deux éléments en plaque (2a, 2b ; 18a, 18b) ou plus qui ont été disposés les uns à côté des autres et/ou les uns après les autres entre les poutres (6, 7 ; 16, 17) de châssis et
- les éléments en plaque (2a, 2b ; 18a-18c) ont été collés, au moins au niveau des surfaces latérales de leurs bords, aux poutres (6, 7 ; 18a-18c) de châssis.

2. Véhicule ou remorque de transport de fret selon la revendication 1, dans lequel/laquelle
- les éléments (2a, 2b) en plaque sont fixés sur le côté de face supérieure des poutres intermédiaires transversales (7) par un adhésif disposé sur les surfaces (13) de face supérieure des poutres intermédiaires (7).

3. Véhicule ou remorque de transport de fret selon la revendication 1 ou 2, dans lequel/laquelle
- le châssis comprend en outre des profilés métalliques de bords (4a-4d),
- le revêtement de sol (3 ; 19) comprend un adhésif
• entre les bords transversaux des éléments en plaque (2a et 2b) adjacents,
• entre les bords longitudinaux intérieurs des éléments en plaque (2b) et les bords latéraux extérieurs des poutres (6) de châssis longitudinales, ainsi que
• entre les bords extérieurs des éléments en plaque (2b) et les côtés intérieurs des profilés de bords (4a, 4d).

4. Véhicule ou remorque de transport de fret selon l'une quelconque des revendications 1 à 3, comprenant
- des éléments de fixation additionnels tels que des rivets, des vis ou des boulons inclus dans les endroits les plus critiques, par exemple dans les coins des éléments en plaque (2a, 2b).

5. Véhicule ou remorque de transport de fret selon l'une quelconque des revendications 1 à 4, dans lequel/laquelle
- le châssis comprend en outre des profilés métalliques de bords (4a-4d) et
- la forme des bords des éléments en plaque (2a, 2b) sont formées de façon à se conformer à la forme des éléments de construction adjacents, de telle sorte que le revêtement de sol (3 ; 19) constitué des éléments en plaque (2a, 2b), des profilés de bords (4a-4d) et des ailes supérieures des poutres de châssis longitudinales (6) est aussi plat et étanche que possible.

6. Véhicule ou remorque de transport de fret selon l'une quelconque des revendications 1 à 5, dans lequel/laquelle
- les éléments en plaque (2a, 2b) sont constitués de contreplaqué enduit à base de bois dur.

7. Véhicule ou remorque de transport de fret selon la revendication 6, dans lequel/laquelle
- les éléments en plaque (2a, 2b) comprennent du contreplaqué constitué de placage de bouleau.

8. Véhicule ou remorque de transport de fret selon l'une quelconque des revendications 1 à 7, dans lequel/laquelle
- au moins une partie des bords des éléments en plaque (2a, 2b ; 18a-18c) a été équipée avec des rainures et des languettes, et les bords opposés à rainure et à languette des éléments en plaque (2a, 2b ; 18a-18c) l'un à côté de l'autre et/ou l'un après l'autre sont interverrouillés et collés l'un à l'autre.
